# EUROPÄISCHE PATENTANMELDUNG

(11) **EP 1 834 865 A1**
(43) Veröffentlichungstag der Anmeldung: **19.09.2007**
(21) Anmeldenummer: 06016798.8
(22) Anmeldetag: 11.08.2006
(51) Int. Cl.: B62J 6/20

(54) **Speichenstrahler**

(30) Priorität: 13.03.2006 DE 202006004063 U
(71) Anmelder: Rudiger, Thomas, 76149 Karlsruhe (DE)
(72) Erfinder: Rudiger, Thomas, 76149 Karlsruhe (DE)
(74) Vertreter: Zieger, Sieglinde

(57) **Zusammenfassung**

Die Erfindung betrifft eine Vorrichtung an Fahrrädern, die unabhängig von Form und Größe Licht reflektiert, um Radfahrer im Dunkeln für andere Verkehrsteilnehmer erkennbar zu machen.

Erfindungswesentlich ist, dass in einem Speichenstrahler ein Fliehkraftschalter in Verbindung mit einem Fotowiderstand, der bei Unterschreitung eines bestimmten Schwellwertes der Lichtintensität und bei gleichzeitiger Bewegung des Speichenrades, die Dämmerungsschaltung aktiviert, den Stromkreis schließt und LED's zum Leuchten aktiviert, angeordnet ist. Eine besondere Variante ist die Verwendung einer Schmitt-Trigger-Auswerteelektronik als Dämmerungsschalter.

Die Vorrichtung ist für jedes Fahrrad geeignet.

## Beschreibung

Speichenstrahler finden insbesondere bei Fahrrädern Anwendung und haben die Aufgabe, unabhängig von Form und Größe, Licht zu reflektieren, um den Radfahrer in der Dunkelheit für andere Verkehrsteilnehmer erkennbar zu machen. Bekannte Speichenstrahler funktionieren so, dass eingestrahltes Licht reflektiert wird, d.h. der Speicherstrahler strahlt nur zurück, wenn er direkt von einer Lichtquelle, z. B. Autoscheinwerfer, angestrahlt wird. Aus DE 100 47 786 A1 ist ein aktiver und passiver Speichenstrahler bekannt, der selbst leuchtet, wobei übliche Leuchtmittel und eine Energiequelle in den Speichenstrahler integriert wurden und der Stromkreis mittels Fliehkraftschalter geschlossen wird. Der Speichenstrahler leuchtet zeitlich begrenzt nach, z.B. bei Stillstand während einer Ampelphase. Zusätzlich zum Fliehkraftschalter wird der Speichenstrahler für den Betrieb bei Tageslicht ein- und ausgeschaltet. Der Radfahrer wird bei Anwendung dieser Speichenstrahler nur bemerkt, wenn das Fahrrad vom Lichtkegel der z. B. Autoscheinwerfer erfasst wird. Für die Sicherheit der Radfahrer ist es aber notwendig, dass ein Fahrradfahrer schon weit vorher als Verkehrsteilnehmer erkannt werden kann. In DE 20 2004 001 387 U1 wird eine selbsttätige Fahrradspeichenbeleuchtung unter Schutz gestellt, mit einem speziell ausgebildeten Fliehkraftschalter, der gewährleistet, dass sich die Speichenbeleuchtung nur bei Bewegung und bei zunehmender Dämmerung einschaltet. Diese Erfindung hat jedoch den Nachteil, dass der Fliehkraftschalter die Dämmerungsschaltung zu ungenau aktiviert.

Vor diesem technischen Hintergrund stellt sich die Erfindung die Aufgabe, einen Speichenstrahler zu entwickeln, der ohne direkte Einwirkung einer Lichtquelle selbst leuchtet und auf die Veränderung des natürlichen Lichtes reagieren kann und die Signalübertragung auf die Dämmerungsschaltung ausreichend genau gewährleistet.

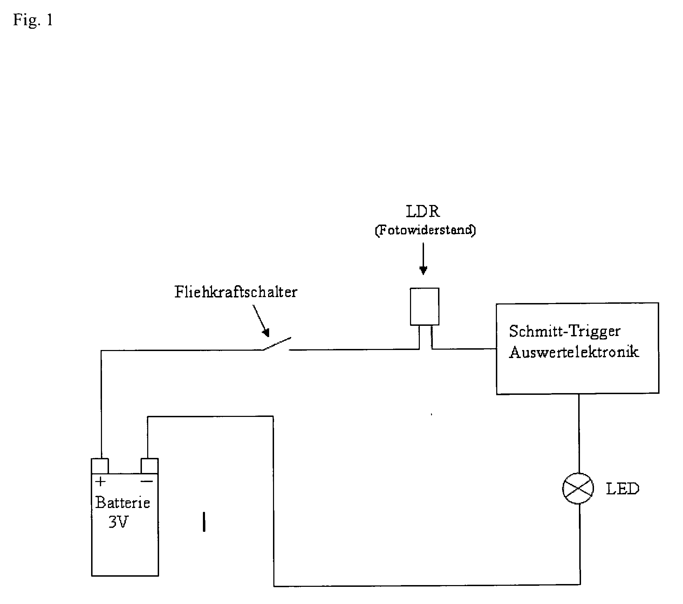

Die Aufgabe der Erfindung wird mit den Merkmalen des Hauptanspruches gelöst. Insbesondere mit der Anordnung einer Schmitt-Trigger-Auswerteelektronik als Dämmerungsschalter werden die Signale genau erzeugt und übertragen. Die Schmitt-Trigger-Auswerteelektronik vergleicht zwei Spannungen miteinander und reagiert auf das Unterschreiten eines bestimmten Eingangsspannungswertes. Erreicht die Ausgangsspannung einen bestimmten Eingangsspannungswert dann kippt die Ausgangsspannung vom Low-Pegel in den High-Pegel. Sinkt jetzt die Eingangsspannung wieder auf einen bestimmten Wert untrehalb des vorherigen Schwellwertes ab, kippt die Ausgangsspannung zurück auf den Low-Pegel. Die Differenzspannung zwischen den Kippspannungen auf der Eingansseite ist die Hysterese. Die Eingangsspannung wird bei der Erfindung mittels Fotowiderstand gesteuert, d.h. je höher die Lichtintensität des natürlichen Lichtes ist, desto kleiner ist der Widerstand und umgekehrt. Ist der Widerstandswert klein, liegt also keine Spannung an den LED's an und der Speichenstrahler leuchtet nicht. Nimmt die Lichtintensität des natürlichen Lichts im Verlauf des Tages ab, vergrößert sich der Widerstandswert und aktiviert ab einem bestimmten Wert die Schaltung, vorausgesetzt der Fliehkraftschalter ist aktiviert d.h. das Speichenrad dreht sich, somit liegt Spannung an den LED's an und die Speichenstrahler leuchten. Wird der Fahrbetrieb kurzzeitig unterbrochen, leuchten die Speichenstrahler durch den Integrierten Kondensator nach. Nachleuchten wird durch die Größe des Kondensators bestimmt. Je größer der Kondensator je länger das Nachleuchten.
Der Speichenstrahler leuchtet, selbstständig sofort in maximaler Helligkeit. Die Schaltung nach der Erfindung gewährleistet sofort die volle Leuchtkraft der LED'S.
Die Erfindung wird anhand der Zeichnung näher erläutert.
Mit der Bewegung des Speichenrades wird der Fliehkraftschalter geschlossen und ohne weitere Bedingung wäre der Stromkreis geschlossen und die LED'S würden mit Strom versorgt und leuchten. Die weitere Bedingung ist die Unterschreitung eines bestimmten Schwellwertes für die Lichtintensität, die wiederum den Fotowiderstand regelt und den Widerstandswert erhöht. Das Stromsignal, das vom Fotowiderstand ausgeht, wird in der Schmitt-Trigger-Auswerteelektronik geschärft und der Stromkreis geschlossen. Die LED'S leuchten sofort in voller Stärke. Mit der Anordnung von Kondensatoren, die nicht dargestellt sind, wird bei plötzlichem Stillstand des Speichenrades ein Nachleuchten abgesichert. Das Nachleuchten ist wichtig, damit der Radfahrer am Straßenrand oder an einer Kreuzung bei Stillstand von anderen Verkehrsteilnehmern wahrgenommen werden kann. Die Speichenbeleuchtung nach der Erfindung gewährleistet eine genaue Signalübertragung vom Fotowiderstand an die LED'S.

## Patentansprüche

1. Speichenstrahler, bei dem eine Energiequelle, LED's, ein Fliehkraftschalter, ein Fotowiderstand und eine Dämmerungsschaltung in einem lichtdurchlässigen Kunststoffgehäuse angeordnet sind, **gekennzeichnet dadurch, dass**
der Fliehkraftschalter in Verbindung mit dem Fotowiderstand, der bei Unterschreitung eines bestimmten Schwellwertes der Lichtintensität und bei gleichzeitiger Bewegung des Speichenrades, die Dämmerungsschaltung aktiviert, den Stromkreis schließt und die LED's zum Leuchten aktiviert.

2. Speichenstrahler nach Anspruch 1 und 2 **gekennzeichnet dadurch, dass**
die Dämmerungsschaltung eine Schmitt-Trigger-Auswertelektronik ist.
